# EUROPÄISCHE PATENTSCHRIFT

(11) **EP 2 740 737 B1**
(45) Veröffentlichungstag und Bekanntmachung des Hinweises auf die Patenterteilung: **16.09.2015**
(21) Anmeldenummer: 12008120.3
(22) Anmeldetag: 05.12.2012
(51) Int. Cl.: C07F 15/00, A61K 31/282, C08G 69/42, C08L 33/26

(54) **1,2-Cyclohexandiaminplatin(II) bis-(4-methylbenzolsulfonat) und dessen Hydrate**
1,2-cyclohexandiamin platinum(II) bis-(4-methylbenzolsulfonate) and its hydrates
1,2-cyclohexanediamineplatine(II) bis-(4-méthylbenzènesulfonate) et ses hydrates

(43) Veröffentlichungstag der Anmeldung: 11.06.2014
(73) Patentinhaber: Heraeus Deutschland GmbH & Co. KG, 63450 Hanau (DE)
(72) Erfinder: Jost, Steffen, 663584 Gründau (DE); Brandes Christian, 63589 Linsengericht (DE); Rauter, Holger, 36103 Flieden (DE); Werner Silvia, 63796 Kahl (DE); Schmengler Stefanie, 64347 Griesheim (DE)
(74) Vertreter: Brand, Normen

(56) Entgegenhaltungen:
- WO-A1-89/10928
- PAUL SCHWARTZ ET AL: "Preparation and antitumor evaluation of water-soluble derivatives of dichloro(1,2-diaminocyclohexane)platinum(I I)", CANCER TREATMENT REPORTS, US GOV. PRINT. OFF, US, Bd. 61, Nr. 8, 1. November 1977 (1977-11-01), Seiten 1519-1525, XP008160398, ISSN: 0361-5960
- European Pharmacopoeia Commission ET AL: "Oxaliplatin", EUROPEAN PHARMACOPOEIA 7.3, 1. Juni 2011 (2011-06-01), Seiten 3988-3990, XP055063407, Gefunden im Internet: URL:http://db.yaozh.com/foreign/EP7.5/Oxal iplatin.pdf [gefunden am 2013-05-21]

## Beschreibung

Die vorliegende Erfindung betrifft das Dihydrat von 1,2-Cyclohexandiaminplatin(II)bis-(4-methylbenzolsulfonat), ein Verfahren zur Herstellung von 1,2-Cyclohexandiaminplatin(II)bis-(4-methylbenzolsulfonat) und dessen Hydraten sowie die Verwendung von 1,2-Cyclohexandiaminplatin(II)bis-(4-methylbenzolsulfonat) und dessen Hydraten.

Seit der Entdeckung der zytostatischen Wirkung von Cisplatin (Diaminodichloroplatin) spielen Platin komplexe eine wichtige Rolle bei der Erforschung und Entwicklung von Antitumorwirkstoffen. Die Wirkung der Platinkomplexe beruht auf einer Hemmung der DNA-Replikation durch Querverknüpfungen zweier benachbarter Guanin-Basen eines DNA-Strangs. So wird die Struktur der DNA gestört und dadurch funktionsunfähig. Der Zellstoffwechsel kommt zum Erliegen und die Zelle leitet die Apoptose ein.

Diese zytostatisch wirkenden Platinkomplexe weisen üblicherweise zwei stabile Liganden und zwei nicht stabile Liganden, welche bei einer Reaktion abgespalten werden, auf. Im Körper reagieren die Platinkomplexe mit Wasser unter Abspaltung der nicht stabilen Liganden. Die so erhaltenen Aqua-Komplexe reagieren dann mit der DNA innerhalb der Zelle und führen hierdurch zum Zelltod.

Ziel der Weiterentwicklung von Platinkomplexen ist zum einen die Stabilität der Komplexe gegenüber Wasser, damit die Ausbildung der Aqua-Komplexe erst im menschlichen Körper und nicht bereits während der Herstellung oder Lagerung stattfindet. Weiterhin sollte der Wirkstoff möglichst selektiv im Tumorgewebe wirken und gesunde Zellen, die nicht mit dem Tumor befallen sind, nicht angreifen.

Ein neuerer zytostatisch wirkender Platinkomplex ist Oxaliplatin (Oxalato[(1*R*,2*R*)-cyclohexandiamin]platin(II)), bei welchem das Platin-Ion mit einem 1,2-Diaminocyclohexyl-Liganden (DACH-Liganden) und einem Oxalation koplexiert ist. Oxaliplatin weist gegenüber Cisplatin verbesserte Eigenschaften insbesondere hinsichtlich der Stabilität auf. Dennoch kommt es auch hier während der Lagerung zu Reaktionen, durch welche Oxaliplatin abgebaut wird, mit der Folge, dass es zu einer Verringerung der Wirkstoffkonzentration und zur Ausreicherung von Verunreinigungen kommt. Gemäß der European Pharmacopeia sind von Oxaliplatin die Verunreinigungen A, B, C, D und E bekannt. Diese werden üblicherweise als "Impurity" bezeichnet.

Bei "Impurity A" handelt es sich um Oxalsäure, welche bei der Hydrolyse von Oxaliplatin entsteht. Bei der Hydrolyse, entsteht ebenfalls die Verunreinigung (*SP*-4-2)-diaqua[(1*R*,2*R*)-cyclohexan-1,2-diamin-κN, κN']platin (diaquodiaminocyclohexanplatin), welche als "Impurity B", also als Verunreinigung B, bezeichnet wird.

Das bei einer Oxidation von Oxaliplatin entstehende (OC-6-33)-[(1R,2R)-cyclohexan-1,2-diamin- κN, κN'][ethan-dioato(2-) κO1, κO2]dihydroplatinum wird als "Impurity C" bezeichnet. Bei "Impurity D" handelt es sich um (SP-4-2)-[(1S,2S)-cyclohexan-1,2-diamin- κN, κN'][efihanedioato(2-)- κO1, κO2]platin, und bei "Impurity E" um (SP-4-2)-di-g-oxobis[(1R,2R)-cyclohexan-1,2-diamine-κN, κN']diplatin. Darüber hinaus sind weitere Verunreinigungen bekannt, die jedoch nur in sehr geringen Mengen auftreten.

Um die entstehenden Verunreinigungen gering zu halten oder möglichst zu vermeiden, schlägt US 2010/0267824 A1 für eine parenteral einzunehmende Oxaliplatin-Verbindung einen pH-Wert im Bereich von 3 bis 4,5 vor. Hierdurch kann der Anteil der Verunreinigungen zwar verringert, nicht jedoch vollständig vermieden werden.

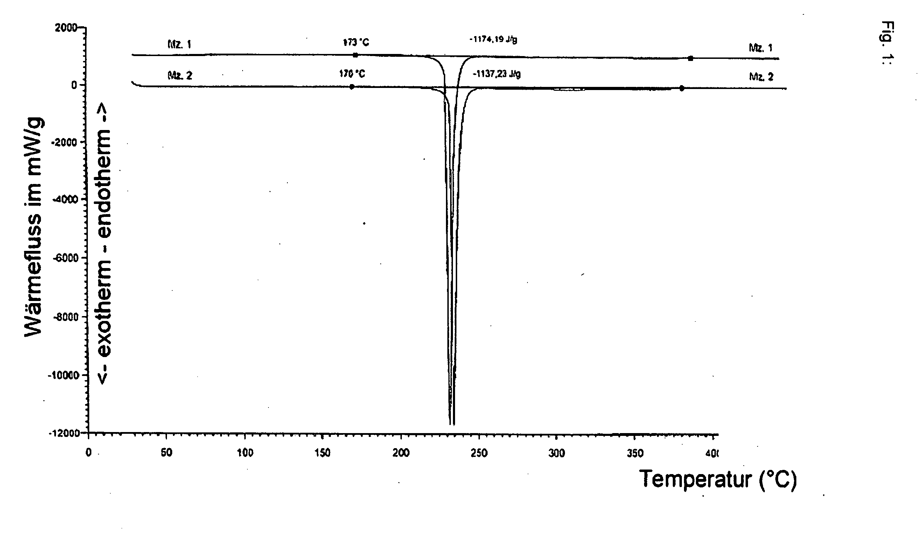

Um den Anteil der Verunreinigungen zu bestimmen, werden Referenzstandards von der European Pharmacopeia festgelegt. Derzeit wird für die Verunreinigung B Dinitrato(1,2-diaminocyclohexan)platin(II) als Referenzstandard verwendet. Dieses bildet in Wasser einen reaktiven Diaminocyclohexandiaquaplatin(II)-Komplex aus. Es wurde nun überraschenderweise gefunden, dass Dinitrato(1,2-diaminacyclohexan)platin(II) ein explosiver Stoff ist, wodurch Transport, Lagerung und Handhabung schwierig sind. Fig. 1 zeigt eine Differenz-Thermo Analyse (DTA-Messung) von Dinitrato(1,2-diaminocyclohexan)platin(II) (Pt(DACH)(NO₈)₂), aus welcher die Explosivitätsneigung hervorgeht. Gemessen wurden zwei Proben Mz1 Mz2 von Pt(DACH)(NO₃)₂. Die Proben wurden jeweils in einer verschlossenen mit Stickstoff gefüllten Glasampulie mit einer Aufheizgeschwindigkeit von 3K/min von Raumtemperatur auf 450 °C aufgeheizt. Bei der Messung wurde die Temperaturdifferenz zwischen der Platin-Verbindung Pt(DACH)(NO₃)₂ und einer Referenzprobe (Al₂O₃) aufgezeichnet. Bei beiden Proben zeigte sich bei 170 °C ein Exothermiebeginn mit einer Wärmetönung von 1,175 J/g. Die Messung wurde nach Richtlinie VDI 2263 durchgeführt.

Es besteht somit Bedarf an einer (1,2-Diaminocyclohexan)platin(II)verbindung, welche in Wasser einen reaktiven Diaminocyclohexandiaquaplatin(II)-Komplex ausbildet aber nicht explosionsfähig ist.

Von Schwartz et al. (Preparation and Antitumor Evaluation of Water-Soluble Derivatives of Dichloro(1,2-diaminocyclohexane)platinum(II), Cancer Treatment Reports Vol. 61, No. 8, November 1977, 1519-1525) wird ein Monohydrat von 1,2-Cyclohexandiaminplatin(II)bis-(4-methylbenzolsulfonat) beschrieben. Dieses bildet in Wasser den gewünschten reaktiven Diaquakomplex aus. Das Monohydrat von 1,2-Cyclohexandiaminplatin(II)bis-(4-methylbenzolsulfonat) weist eine Wasserlöslichkeit von,3 mg/ml auf. Gegenüber dem bisher als Standard verwendeten Dinitrato(1,2-diaminocyclohexan)platin(II), welches eine Löslichkeit von etwa 0,5 mg/ml in Wasser besitzt, wurde auch die Löslichkeit verbessert. Eine weitere Verbesserung der Löslichkeit wäre jedoch wünschenswert.

In der Veröffentlichung von Schwartz et al. (aaO) ist ein Verfahren zur Herstellung des Monohydrats von 1,2-Cyclohexandiaminplatin(II)bis-(4-methylbenzolsulfonat) beschrieben. In diesem wird das Lösungsmittel Wasser abgezogen. Hierdurch kann die Kristallisation des Produkts kaum kontrolliert werden. Die Isolation des Produktes erfolgt mechanisch. Bei einer Herstellung des Produkts im großen Maßstab wäre dies problematisch, da große Mengen einer festen Kruste abgekratzt werden müssten. Dies wäre auch für das zuständige Personal unter Umständen gefährlich, da durch die mechanische Isolierung Stäube und feine Partikel auftreten, welche eingeatmet werden können.

Die erhaltene Form sollte eine gute Wasserlöslichkeit besitzen und insgesamt gut handhabbar sein. Hierdurch sollen nachteilige Eigenschaften von Dinitrato(1,2-diaminocyclohexan)platin(II) vermieden werden.

Neben der Stabilität ist für Antitumor-Wirkstoffe auch entscheidend, dass diese möglichst gezielt am betroffenen Gewebe wirken. Hierfür können Polymere oder Target-Moleküle an einen Platinkomplex gebunden werden. Entsprechende Polymere und Target-Moleküle sind beispielsweise in US 2011/0286958 A1 beschrieben. Die Polymere substituieren die nicht stabilen Liganden des Platinkomplexes. Als Ausgangsmaterial zur Anbindung der Polymere an einen Platin-Komplex wird Dinitrato(1,2-diaminocyclohexan)platin(II) verwendet. Dieses ist jedoch schlecht in Wasser löslich. Zudem handelt es sich hierbei, wie bereits ausgeführt, um einen explosiven Stoff, so dass Herstellung, Transport, Lagerung und Handhabung schwierig sind.

Weiterhin offenbart auch die WO 89/10928A1 die Herstellung von Platin-Polymer Komplexen ausgehen von [Pt(DACH)(NO₃)₂] und verschiedenen Polymeren in Wasser. Die WO 89/10928 A1 offenbart jedoch keine Pt(PACH)(Tosylat)₂.

Gemäß einem ersten Aspekt besteht daher die Aufgabe der vorliegenden Erfindung darin, eine alternative Verbindung für Dinitrato(1,2-diaminocyclohexan)platin(II) bereitzustellen, die gegenüber dieser eine verbesserte Löslichkeit hat. Zudem sollte die Verbindung stabil sein und möglichst leicht handhabbar sein. Weiterhin sollte sie auch geeignet sein, als Referenzstandard für die Verunreinigung B von Oxaliplatin eingesetzt zu werden.

In einem weiteren Aspekt ergibt sich daher als Aufgabe für die vorliegende Erfindung die Bereitstellung eines Verfahrens zur Herstellung einer Verbindung, die als Alternative zu Dinitrato(1,2-diaminocyclohexan)platin(II) eingesetzt werden kann, welches die zuvor genannten Nachteile vermeidet. Die aus dem Verfahren erhaltene Verbindung sollte zudem geeignet sein, als Referenzstandard für die Verunreinigung B von Oxaliplatin verwendet zu werden. Weiterhin sollte die Verbindung als alternativer Ausgangsstoff zum Ersatz von Dinitrato(1,2-diaminocyclohexan)platin(II) bei der Synthese polymergebundener Cyclohexandiamin-Platin(II) Komplexe eingesetzt werden können.

Überraschenderweise hat sich gezeigt, dass die Aufgabe gemäß dem ersten Aspekt der vorliegenden Erfindung gelöst wird durch das Dihydrat von 1,2-Cyclohexandiaminplatin(II)bis-(4-methylbenzolsulfonat). Das Dihydrat zeigt bei einer Temperatur von 25°C und Normaldruck eine Löslichkeit im Wasser von etwa 90 mg/ml. Die Löslichkeit konnte somit gegenüber dem Monohydrat, welches aus dem Stand der Technik bekannt ist und eine Löslichkeit in Wasser unter denselben Bedingungen von etwa 3 mg/ml aufweist, deutlich verbessert werden.

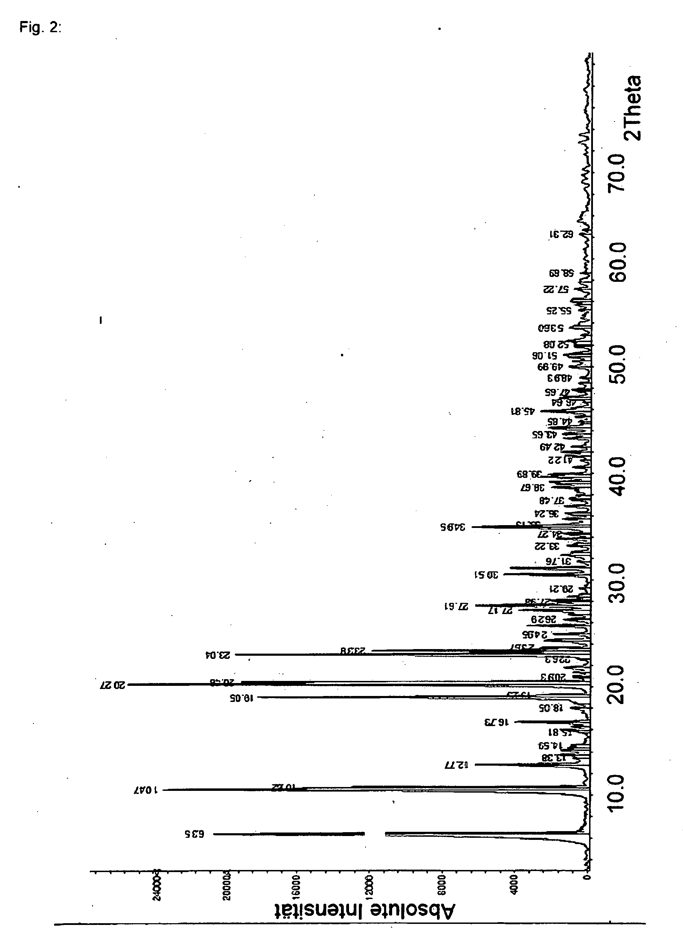

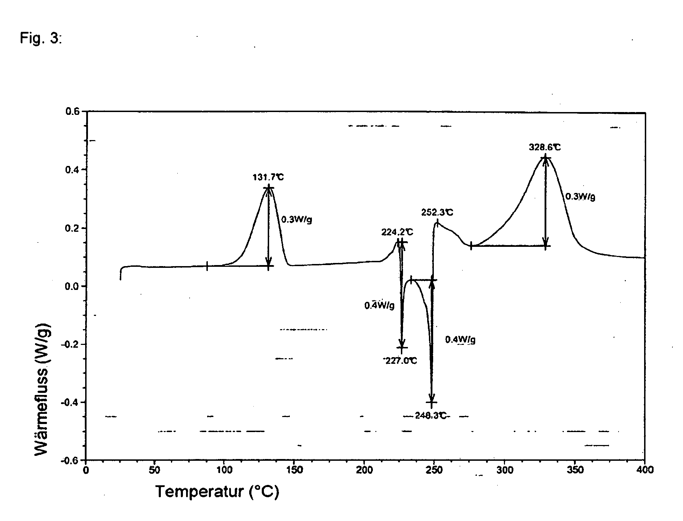

Das Dihydrat von 1,2-Cyclohexandiaminplatin(II)bis-(4-methylbenzolsulfonat) liegt vorzugsweise in Form von Kristallen vor. Deren Analyse erfolgte mittels Röntgenbeugungspulverdiffraktometrie (XRPD) (Fig. 2) und dynamischer Differenzkalorimetrie (differential scanning calorimetry, DSC) (Fig. 3).

Das Röntgenbeugungspulverdiffraktogramm in Fig. 2 zeigt die typischen Signallagen des kristallinen Materials bei Werten für 2Theta (2θ) von 6,35±0,2, 10,47±0,2, 10,62±0,2, 12,77±0,2, 19,05±0,2, 20,27±0,2, 20,40±0,2, 23,04±0,2, 23,38±0,2, 27,61±0,2, 30,51±0,2 und 34,95±0,2. Der Fehler ergibt sich durch bekannte Unsicherheiten in der XRPD-Messung wie beispielsweise vorhandene Reste an Lösungsmittel in der Probe. In Fig. 2 sind sowohl die diskreten Signalpeaks als auch das Spektrum des Dihydrats von 1,2-Cyclohexandiaminplatin(II)bis-(4-methylbenzolsulfonat) dargestellt. Die XRPD-Spektren werden bevorzugt in einem Stadi P Powder Diffraction System der Firma Stoe (Darmstadt, Deutschland) mittels Cu K□₁ Strahlung (1,54056 Angström = 0,154056 nm) aufgenommen. Die Messung erfolgt bevorzugt in Transmission mit einem gebogenen Ge-Monochromator (111) und einem IP-PSD (Imaging Plate Position Sensitive detector) Detektor bei einer Erzeugerspannung für die Röntgenröhre von 40 kV und 30 mA. Bevorzugt wird die Probe in einem festen Winkel Omega von 40° eingebracht, wobei Omega die Orientierung des Probe bzw. des Probenträgers zum Röntgenprimärstrahl währen der Messung bezeichnet. Bevorzugt wird in einem Scanbereich für 2Theta von 3,0° bis 79,05° gemessen.

Das DSC-Spektrum (Fig. 3) zeigt eine Anzahl endo- und exothermer Signale, die auf Wasserabgabe oder Phasenübergänge zurückzuführen sind. Die Größe der gemessenen Probe betrug 11,550 mg des Dihydrats von 1,2-Cyclohexandiaminplatin(II)bis-(4-methylbenzolsulfonat). Es sind jedoch keine Peaks erkennbar, aus welchen sich eine explosionsartige Zersetzung, wie sie bei Pt(DACH)(NO₃)₂ auftritt, vermuten lässt. Die DSC Aufnahmen werden bevorzugt in einem DSC Q2000 der Firma TA Instruments (New Castle, Delaware, USA) durchgeführt. Vorzugsweise wird die Probe bei 25 °C equilibriert und die Messung mit einer Temperaturrampe von 2 °C bis zu einer Temperatur von 400 °C durchgeführt.

Bei beiden Verfahren (XRPD uns DSC) handelt es sich um im Stand der Technik hinlänglich bekannte Messverfahren.

Darüber hinaus stellt überraschenderweise das Dihydrat von 1,2-Cyclohexandiaminplatin(II)bis-(4-methylbenzolsulfonat) die thermisch stabilere Form gegenüber dem Monohydrat von 1,2-Cyclohexandiaminplatin(II)bis-(4-methylbenzolsulfonat) dar.

In Wasser bildet das Dihydrat von 1,2-Cyclohexandiaminplatin(II)bis-(4-methylbenzolsulfonat) einen reaktiven Diaminocyclohexandiaquaplatin(II)-Komplex aus. Im gelösten Zustand liegt somit ein 1,2-Cyclohexandiamindiaquaplatin(II)bis-(4-methylbenzolsulfonat)-Komplex vor. Im festen Zustand kann die erfindungsgemäße Verbindung unterschiedliche Formen aufweisen. Dabei ist es möglich, dass neben der Diaminocyclohexan-Gruppe (DACH) an das zentrale Platin(II)-Atom noch beide Tosylat-Gruppen (4-methylbenzolsulfonat-Gruppen) koordiniert sind. Weiterhin können auch im festen Zustand zwei Wasser-Moleküle an das Platin(II)-Atom koordiniert sein, oder es liegt eine Mischform vor, in welcher ein Tosylat-Molekül und ein Wasser-Molekül am Platin(II)-Atom koordiniert sind.

Das erfindungsgemäße Dihydrat von 1,2-Cyclohexandiaminplatin(II)bis-(4-methylbenzolsulfonat) weist gegenüber dem aus dem Stand der Technik bekannten Monohydratkomplex eine deutlich verbesserte Löslichkeit in Wasser von mehr als 80 mg/ml auf. Auch das im Stand der Technik hinlänglich beschriebene Dinitrato(1,2-diaminocyclohexan)platin(II) besitzt eine gegenüber der erfindungsgemäßen Verbindung deutlich schlechtere Löslichkeit von nur etwa 0,5 mg/ml auf. Die Löslichkeit im Sinne der vorliegenden Erfindung bezieht sich auf Löslichkeit bei Raumtemperatur und Normaldruck. Dies wird in der vorliegenden Anmeldung auch als Löslichkeit bei Standardbedingungen bezeichnet. Weiterhin handelt es sich bei dem erfindungsgemäßen Dihydrat von 1,2-Cyclohexandiaminplatin(II)bis-(4-methylbenzolsulfonat) um eine nicht explosive Verbindung, was aus dem als Figur 3 beigefügten DSC-Spektrum erkennbar ist. Diese kann zudem in einer definierten Kristallform vorliegen, was über das als Figur 2 beigefügte Röntgenpulverdiffraktogramm nachgewiesen werden kann.

Gemäß dem weiteren Aspekt der vorliegenden Anmeldung stellt die vorliegende Erfindung ein Verfahren zur Herstellung einer alternativen Verbindung von Dinitrato(1,2-diamincyclohexanplatin(II) bereit, welches die folgenden Schritte in der genannten Reihenfolge umfasst
a) Umsetzung von 1,2-Cyclohexandiamindihalogenplatin(II) mit Silber-4-methylbenzolsulfonat In einem Wasser enthaltenden Lösungsmittel unter Bildung von 1,2-Cyclohexandiaminplatin(II)bis-(4-methylbenzolsulfonat) und Silberhalogenid,
b) Abtrennung des Silberhalogenids aus der Reaktionsmischung aus Schritt a),
c) Zugabe einer Verbindung, die mit Wasser ein azeotropes Gemisch bildet,
d) wenigstens teilweises Entfernen des Wassers aus dem azeotropen Gemisch,
e) Einstellung des Anteils an Wasser zur Ausbildung des gewünschten Hydrats von 1,2-Cyclohexandiaminplatin(II)bis-(4-methylbenzolsulfonat) und
f) Isolation von 1,2-Cyclohexandiaminplatin(II)bis-(4-methylbenzolsulfonat) oder des Hydrats von 1,2-Cyclohexandiaminplatin(II)bis-(4-methylbenzolsulfonat).

Das erfindungsgemäße Verfahren ermöglicht die Herstellung des Monohydrats von 1,2-Cyclohexandiaminplatin(II)bis-(4-methylbenzolsulfonat), welches bereits von Schwartz et al. (aaO) beschrieben ist. Im Gegensatz zu dem dort beschriebenen Herstellungsverfahren wird das Lösungsmittel nicht unkontrolliert abgezogen. Hierdurch ist eine kontrollierte Kristallisation des gewünschten Produktes möglich. Durch das erfindungsgemäße Verfahren ist auch eine Herstellung des gewünschten Produktes im größeren Maßstab möglich. Eine Gefährdung für an der Herstellung beteiligte Personen besteht nicht.

Darüber hinaus ist es möglich, nicht nur das Monohydrat, sondern auch das Dihydrat von 1,2-Cyclohexandiaminplatin(II)bis-(4-methylbenzolsulfonat) oder weitere Hydrate davon herzustellen. Das Verfahren ermöglicht weiterhin die Herstellung des nicht-hydratisierten Platinkomplexes 1,2-Cyclohexandiaminplatin(II)bis-(4-methylbenzolsulfonat). Die vorliegende Erfindung stellt somit ein Verfahren zur Herstellung von 1,2-Cyclohexandiaminplatin(II)bis-(4-methylbenzolsulfonat) und dessen Hydraten bereit, welches die im Stand der Technik bekannten Nachteile vermeidet.

Bei den Halogenatomen, welche in der in Schritt a) vorhandenen Grundsubstanz 1,2-Cyclohexandiamindihalogenplatin(II) vorliegen, kann es sich um beliebige Halogenatome handeln. Bevorzugt handelt es sich um Chlor (CI), Brom (Br) und/oder lod (I). Dabei kann der eingesetzte Platin(II)-Komplex zwei gleiche oder zwei voneinander verschiedene Halogenliganden aufweisen. Bevorzugt befinden sich zwei gleiche Halogenliganden an dem Platin(II)-Komplex, da so eine eindeutige Stöchiometrie in der Reaktion mit dem Silber-Salz bestimmt werden kann. Bevorzugt setzt man somit 1,2-Cyclohexandiamindibromoplatin(II)bis-(4-methylbenzolsulfonat), 1,2-Cyclohexandiamindichloroplatin(II)bis-(4-methylbenzolsulfonat) oder 1,2-Cyclohexandiamindiiodoplatin(II)bis-(4-methylbenzolsulfonat) als Edukt in Schritt a) des erfindungsgemäßen Verfahrens ein.

Die Umsetzung von 1,2-Cyclohexandiamindihalogenplatin(II) mit Silber-4-methylbenzolsulfonat in Schritt a) findet in einem Wasser enthaltendem Lösungsmittel statt. Bevorzugt handelt es sich hierbei um Wasser oder eine Mischung, welche Wasser und wenigstens eine weitere Verbindung, welche mit Wasser ein azeotropes Gemisch bildet, enthält, ist. Dabei ist es möglich, dass das Wasser mit mehreren unterschiedlichen Verbindungen gemischt wird. Die Verbindungen müssen in definierten Verhältnissen wassermischbar sein und mit Wasser ein azeotropes Gemisch bilden. Erfindungsgemäß ist es auch möglich, nur eine Verbindung mit Wasser zu mischen, wodurch es zur Ausbildung des azeotropen Gemisches kommt.

Die Umsetzung des 1,2-Cyclohexandiamindihalogenplatin(II)-Komplexes mit Silber-4-methylbenzolsulfonat in Schritt a) erfolgt vorzugsweise unterstöchiometrisch in Bezug auf Silber-4-methylbenzolsulfonat. Bei der Synthese wird also der Platinkomplex mit weniger als zwei Moläquivalenten an Silbersalz umgesetzt. Eine bevorzugte Menge an Silber-4-methylbenzolsulfonat liegt im Bereich von 1,88 bis 1,99 Moläquivalenten, besonders bevorzugt ist eine Menge im Bereich von 1,92 bis 1,96 Moläquivalenten. Durch die Reaktion der beiden Komponenten entsteht 1,2-Cyclohexandiaminplatin(II)bis-(4-methylbenzolsulfonat) sowie Silberhalogenid. Die Reaktion findet in einem Wasser enthaltenden Lösungsmittel statt. In diesem sind die entstehenden Silberhalogenide nur sehr schwer löslich und fallen daher aus. Der entsprechende Niederschlag kann so leicht vom Rest der Reaktionsmischung vorzugsweise durch Filtration abgetrennt werden. Durch die unterstöchiometrische Umsetzung in Bezug auf Silber-4-methylbenzolsulfonat wird vermieden, dass Silber im Endprodukt enthalten ist. Eine Abtrennung wäre dann schwierig. Der Anteil an Silber-4-methylbenzolsulfonat darf auch nicht zu gering sein, da ansonsten nur ein geringer Anteil an 1,2-Cyclohexandiamindihalogenplatin(II) mit der Tosylat-Gruppe umgesetzt wird und die Menge am gewünschten Produkt (1,2-Cyclohexandiaminplatin(II)bis-(4-methylbenzolsulfonat) und dessen Hydraten) gering ist.

Zur Absorption von Nebenprodukten oder nicht umgesetzten Edukten ist es möglich, dass man nach der Abtrennung des Silberhalogenids in Schritt b) des erfindungsgemäßen Verfahrens und vor Zugabe der Verbindung, die mit Wasser ein azeotropes Gemisch bildet, in Schritt c) der Reaktionsmischung Aktivkohle zusetzt. Erfolgt die Umsetzung gemäß einer bevorzugten Ausführungsform unterstöchiometrisch, so wird durch die Aktivkohle insbesondere nicht umgesetztes 1,2-Cyclohexandiamindihalogenplatin(II) aus der Reaktionsmischung entfernt. Daneben werden durch die Aktivkohle auch Silbersalze und Nebenprodukte entfernt.

Bevorzugt wird die Aktivkohle in einem Anteil von 1 Gew.-% bis 20 Gew.-%, besonders bevorzugt von 2 Gew.-% bis 10 Gew.-%, insbesondere bevorzugt von 3 Gew.-% bis 7 Gew.%, noch weiter bevorzugt 5 Gew.-%, bezogen auf die eingesetzte Platin(II)-Verbindung, zugegeben. Diese Menge ist ausreichend, um die vorhandenen nicht-umgesetzten Edukte und Nebenprodukte aus der Reaktionsmischung zu entfernen.

Nach Abtrennung des Silberhalogenids wird in Schritt c) des erfindungsgemäßen Verfahrens wenigstens eine Verbindung zugegeben, die mit Wasser ein azeotropes Gemisch bildet. Dabei kann der Reaktionsmischung eine Verbindung zugegeben werden. Es ist erfindungsgemäß auch möglich, mehrere Verbindungen, die mit Wasser ein azeotropes Gemisch bilden, in Schritt c) der Verfahrens zuzugeben. Die wenigstens eine Verbindung ist vorzugsweise ausgewählt aus der Gruppe umfassend Alkohole und halogenierte Kohlenwasserstoffe. Diese bilden mit Wasser ein azeotropes Gemisch aus. Gleichzeitig ist in diesen Verbindungen die Löslichkeit von 1,2-Cyclohexandiaminplatin(II)bis-(4-methylbenzolsulfonat) und dessen Hydraten besonders hoch. Bevorzugt beträgt die Löslichkeit der Platin(II)-Verbindung 5 g/l oder mehr, besonders bevorzugt 7 g/l oder mehr bei Standardbedingungen (Raumtemperatur, Normaldruck). Besonders bevorzugt ist die Verbindung ausgewählt aus der Gruppe, umfassend n-Butanol, Toluol, Chloroform und Ethanol. Eine Mischung, welche Wasser und die erfindungsgemäße Verbindung enthält, kann auch als Wasser enthaltendes Lösungsmittel in Schritt a) des erfindungsgemäßen Verfahrens eingesetzt werden.

Bevorzugt wird der Reaktionsmischung lediglich eine Verbindung, welche bevorzugt aus der Gruppe umfassend Alkohole oder halogenierte Kohlenwasserstoffe, besonders bevorzugt aus der Gruppe umfassend n-Butanol, Toluol, Chloroform und Ethanol ausgewählt ist, zugegeben. In einer besonders bevorzugten Ausführungsform wird der Reaktionsmischung in Schritt c) des erfindungsgemäßen Verfahrens n-Butanol zugegeben. n-Butanol wird besonders bevorzugt benutzt, da der Siedepunkt des azeotropen Gemisches aus n-Butanol und Wasser von 92 °C günstig für die weiteren Schritte des erfindungsgemäßen Verfahrens ist. Zudem ist das in diesem Schritt erhaltene Produkt, 1,2-Cyclohexandiaminplatin(II)bis-(4-methylbenzolsulfonat), gut löslich in n-Butanol, was die weitere Aufarbeitung des Produktes erleichtert und eine hohe Ausbeute des Produktes ermöglicht.

Anschließend wird aus dem sich ausbildenden azeotropen Gemisch das Wasser wenigstens teilweise entfernt. Dies kann mit im Stand der Technik bekannten Verfahren erfolgen. Bevorzugt erfolgt die Entfernung des Wassers durch azeotrope Destillation. Besonders bevorzugt wird das Wasser aus dem azeotropen Gemisch in Schritt d) des erfindungsgemäßen Verfahrens nicht nur teilweise, sondern vollständig entfernt. Hierdurch enthält man die Verbindung, welche mit Wasser ein azeotropes Gemisch bildet. In dieser sind 1,2-Cyclohexandiaminplatin(II)bis-(4-methylbenzolsulfonat) und dessen Hydrate löslich.

Nach dem wenigstens teilweise Entfernen des Wassers aus dem azeotropen Gemisch wird der Anteil an Wasser, der zur Ausbildung des gewünschten Hydrats von 1,2-Cyclohexandiaminplatin(II)bis-(4-methylbenzolsulfonat) notwendig ist, eingestellt. Der benötigte Anteil an Wasser kann stöchiometrisch berechnet werden. Soll das erfindungsgemäße Verfahren zur nicht hydratisierten Form von 1,2-Cyclohexandiaminplatin(II)bis-(4-methylbenzolsulfonat) führen, so wird hier kein Wasser zugegeben. Um ein Hydrat der Verbindung zu erhalten, kann die Menge des benötigten Wassers berechnet und zur Reaktionsmischung beigemischt werden. Bevorzugt stellt man in Schritt e) des erfindungsgemäßen Verfahrens den Anteil an Wasser so ein, dass man das Dihydrat von 1,2-Cyclohexandiaminplatin(II)bis-(4-methylbenzolsulfonat) erhält und dieses dann in Schritt f) des erfindungsgemäßen Verfahrens entfernt.

Die Isolation des Produkts in Schritt f) kann nach im Stand der Technik bekannten Verfahren erfolgen. Bevorzugt gibt man zur Isolation von 1,2-Cyclohexandiaminplatin(II)bis-(4-methylbenzolsulfonat) oder des Hydrats von 1,2-Cyclohexandiaminplatin(II)bis-(4-methyl-benzolsulfonat) ein Antisolvens zur Reaktionsmischung hinzu. Das gewünschte Produkt weist eine geringe Löslichkeit von vorzugsweise weniger als 2 g/l, insbesondere von weniger als 1 g/l bei Standardbedingungen (Raumtemperatur, Normaldruck) im Antisolvens auf. Gleichzeitigt weist das Antisolvens eine hohe Löslichkeit in der Verbindung, die mit Wasser ein azeotropes Gemisch bildet, auf. Hohe Löslichkeit im Sinne der vorliegenden Erfindung bedeutet eine vorzugsweise unbegrenzte Mischbarkeit der des Antisolvens in der Verbindung, die mit Wasser ein azeotropes Gemisch bildet, in jedem beliebigen Verhältnis unter Ausbildung einer homogenen Phase. Erfindungsgemäß kann ein Antisolvens allein oder es können mehrere Verbindungen miteinander gemischt als Antisolvens eingesetzt werden.

Bevorzugt wird Ethylacetat und/oder Aceton als Antisolvens im erfindungsgemäßen Verfahren eingesetzt. Besonders bevorzugt ist Ethylacetat als Antisolvens, insbesondere wenn es sich bei der Verbindung, die mit Wasser ein azeotropes Gemisch bildet, um n-Butanol handelt. Ethylacetat und n-Butanol sind gut miteinander mischbar. Gleichzeitig ist das gewünschte Produkt, 1,2-Cyclohexandiaminplatin(II)bis-(4-methylbenzolsulfonat) oder dessen Hydrate, zwar in n-Butanol, nicht jedoch in Ethylacetat löslich.

Zur weiteren Aufreinigung der erhaltenen Verbindung ist es möglich, diese umzukristallisieren. Hierfür wird die Verbindung in der Verbindung, die mit Wasser ein azeotropes Gemisch bildet, gelöst. Durch Zugabe des Antisolvens erhält man vorzugsweise Kristalle der gewünschten Verbindung.

In einer besonderen Ausführungsform umfasst die vorliegende Erfindung daher ein Verfahren zur Herstellung von 1,2-Cyclohexandiaminplatin(II)bis-(4-methylbenzolsulfonat und dessen Hydraten umfassend die folgenden Schritte:
a) Umsetzung von 1,2-Cyclohexandiamindihalogenplatin(II), wobei die beiden Halogene gleich und ausgewählt sind aus Chlor, Brom oder lod, mit Silber-4-methylbenzolsulfonat, wobei das Silber-4-methylbenozolsulfonat unterstöchiometrisch in Bezug auf die Platin(II)-Verbindung enthalten ist, in einem Wasser enthaltenden Lösungsmittel unter Bildung von 1,2-Cyclohexandiaminplatin(II)bis-(4-methylbenzolsulfonat) und Silberhalogenid,
b) Abtrennung des Silberhalogenids aus der Reaktionsmischung aus Schritt a), und anschließendes Zusetzen von Aktivkohle zur Reaktionsmischung,
c) Zugabe von n-Butanol,
d) vollständiges Entfernen des Wassers aus dem azeotropen Gemisch mittels azeotroper Destillation,
e) Einstellung des Anteils an Wasser zur Ausbildung des Diydrats von 1,2-Cyclohexandiaminplatin(II)bis-(4-methylbenzolsulfonat) und
f) Isolation des Dihydrats von 1,2-Cyclohexandiaminplatin(II)bis-(4-methylbenzolsulfonat) durch Zugabe von Ethylacetat als Antisolvens.

Durch die Zugabe des Antisolvens wird vorzugsweise sichergestellt, dass es zu einer bevorzugten langsamen, kontrollierten Kristallisation des Produktes kommt. Eine unkontrollierte Kristallisation, wie sie beim Abziehen des Lösungsmittels üblicherweise vorkommt, kann so vermieden werden. Durch das erfindungsgemäße Verfahren erhält man eine kristalline Verbindung mit definierter Zusammensetzung.

Insbesondere die kontrollierte Herstellung gemäß dem erfindungsgemäßen Verfahren ermöglicht eine Verwendung als Referenzstandard, da hierfür eine klar definierte Verbindung vorhanden sein muss.

In der European Pharmacopeia EP 7.3 wird derzeit die Verbindung 1,2-Cyclohexandiamindinitratoplatin(II) (=Dinitrato(1,2-diaminocyclohexan)-platin(II)) als Referenzstandard für Verunreinigung B von Oxaliplatin angegeben. Dessen Verwendung wird wie folgt beschrieben:
Zur Verwendung als Referenzstandard werden 5 mg des Oxaliplatin Impurity B CRS (Impurity = Verunreinigung; CRS = current reference standard) in 25 ml Methanol gelöst und auf 100 ml mit Wasser aufgefüllt. Die Lösung wird 1,5 Stunden in einem Ultraschall beschallt, bis eine klare Lösung entstanden ist. Vom Wirkstoff Oxaliplatin werden für die Analyse 100 mg der Substanz in Wasser gelöst und auf 50 ml aufgefüllt.

Beide Lösungen werden nacheinander in ein HPLC-System injiziert (Säule I = 0,25 m; Durchmesser = 4,6 mm; stationäre Phase: Basen-deaktiviertes Octadecylsilyl Silicagel 5 µm). Die Messtemperatur beträgt 40 °C. Die mobile Phase besteht aus 20% Acetonitril und 80 % einer wässrigen Lösung von 1,36 Kaliumhydrogenphosphat und 1 g Natriumheptansulfonat in 1000 ml Wasser, eingestellt auf pH 3.0 ± 0.05 mit Phosphorsäure. Messbedingungen: Flussrate 2.0 mL/min., Detektion: Spectrophotometer bei 215 nm, Injektionsvolumen: 20 µL.

Der Anteil an Impurity B im Wirkstoff Oxaliplatin wird durch das Verhältnis der Flächen-% in den jeweiligen HPLC-Chromatogrammen berechnet.

Die Nachteile der Verwendung von 1,2-Cyclohexandiamindinitratoplatin(II) als Standard für Verunreinigung B ((*SP*-4-2)-diaqua[(1*R*,2*R*)-cyclohexan-1,2-diamin-κN, κN']platin) liegen in dessen Explosionsneigung sowie der schlechten Löslichkeit in Wasser.

Überraschenderweise hat sich gezeigt, dass der Referenzstandard ersetzt werden kann, wodurch die genannten Nachteile vermieden werden. Die erfindungsgemäße Verwendung von 1,2-Cyclohexandiaminplatin(II)bis-(4-methylbenzolsulfonat) und dessen Hydraten als Referenzstandard für Verunreinigung B von Oxaliplatin umfasst daher
i. Bereitstellen einer Lösung von Oxaliplatin,
ii. Bereitstellen einer Lösung von 1,2-Cyclohexandiaminplatin(II)bis-(4-methylbenzolsulfonat) oder dessen Hydraten als Referenzstandard,
iii. Chromatographische Aufnahme der Oxaliplatin-Lösung aus Schritt i),
iv. Chromatographische Aufnahme der Referenzstandard-Lösung aus Schritt ii) und
v. Vergleich der chromatographischen Aufnahmen aus den Schritten iii) und iv) zur Bestimmung des Anteils an (*SP*-4-2)-diaqua[(1*R*,2*R*)-cyclohexan-1,2-diamin-κN, κN']platin.

In einem häufig eingesetzten Syntheseverfahren für Oxaliplatin entsteht als Nebenprodukt die Substanz Dinitrato(1,2-diaminocyclohexan)platin(II). Diese Substanz wird daher im Stand der Technik als Referenzstandard für die Verunreinigung B, (*SP*-4-2)-diaqua[(1*R*,2*R*)-cyclohexan-1,2-diamin-κN, κN']platin, eingesetzt. Es hat sich nun jedoch gezeigt, dass diese Substanz unter Wärmeeinwirkung explodieren kann, wie aus der als Fig. 1 beigefügten DTA Messung hervorgeht. Eine solche Explosionsneigung zeigt das erfindungsgemäß verwendete 1,2-Cyclohexandiaminplatin(II)bis-(4-methylbenzolsulfonat) nicht. Auch die erfindungsgemäß einsetzbaren Hydrate sind thermisch stabil, wie dies aus dem beigefügten DSC-Spektrum (Fig. 3) für das Dihydrat erkennbar ist. Durch das erfindungsgemäße Verfahren erhält man zudem kontrolliert kristallisierte Produkte, deren Zusammensetzung klar definiert ist. Somit kann die Konzentration der Lösung in Schritt ii) reproduzierbar eingestellt werden.

Vorzugsweise verwendet man eine wässrige Lösung von Oxaliplatin und auch eine wässrige Lösung von 1,2-Cyclohexandiaminplatin(II)bis-(4-methylbenzolsulfonat) oder dessen Hydraten. Hier hat die erfindungsgemäß Verbindung gegenüber der aus dem Stand der Technik bekannten Dinitratverbindung den weiteren Vorteil, dass sie eine bessere Löslichkeit in Wasser aufweist. Somit können auch höher konzentrierte Lösungen als Referenzstandard bereitgestellt werden.

Zur Bestimmung des Anteils an Verunreinigung B in Oxaliplatin kann beispielsweise eine wässrige Lösung von Oxaliplatin mit einer Konzentration von 2 mg/ml in Wasser hergestellt werden. Als Referenzstandard wird eine wässrige Lösung von 1,2-Cyclohexandiaminplatin(II)bis-(4-methylbenzolsulfonat) oder dessen Hydraten verwendet. Diese Lösung kann eine Konzentration von 0,05 mg/ml aufweisen.

In einer bevorzugten Ausführungsform wird das Dihydrat von 1,2-Cyclohexandiaminplatin(II)bis-(4-methylbenzolsulfonat) als Referenzstandard verwendet. Das Dihydrat weist eine Löslichkeit von 80 mg/ml oder mehr in Wasser auf. Es können somit unterschiedliche Referenzstandards einfach bereitgestellt werden.

Im Weiteren werden chromatographische Aufnahmen der Oxaliplatinlösung und anschließend der Referenzstandardlösung aufgenommen. Durch Vergleich der chromatographischen Aufnahmen kann der Anteil an Verunreinigung B in Oxaliplatin bestimmt werden.

Bevorzugt handelt es sich bei den chromatographischen Aufnahmen der Oxaliplatinlösung und der Referenzstandardlösung um Hochdruckflüssigkeitschromatographische (HPLC) Aufnahmen. Bei der HPLC handelt es sich um ein hinlänglich bekanntes, chromatographisches Verfahren. Durch den Vergleich der Flächen, der im Chromatogramm vorhandenen Signalpeaks kann hier auf den Anteil an Verunreinigungen im Oxaliplatin geschlossen werden.

In einer bevorzugten Ausführungsform betrifft die vorliegende Erfindung daher die Verwendung des Dihydrats von 1,2-Cyclohexandiaminplatin(II)bis-(4-methylbenzolsulfonat) als Referenzstandard für die Bestimmung der Verunreinigung B von Oxaliplatin. Diese umfasst
i. Bereitstellen einer wässrigen Lösung von Oxaliplatin,
ii. Bereitstellen einer wässrigen Lösung des Dihydrats von 1,2-Cyclohexandiaminplatin(II)bis-(4-methylbenzolsulfonat) als Referenzstandard,
iii. Chromatographische Aufnahme mittels HPLC der Oxaliplatin-Lösung aus Schritt i),
iv. Chromatographische Aufnahme mittels HPLC der Referenzstandard-Lösung aus Schritt ii) und
v. Vergleich der chromatographischen Aufnahmen aus den Schritten c) und d) zur Bestimmung des Anteils an (SP-4-2)-diaqua[(1R,2R)-cyclohexan-1,2-diamin-κN, κN']platin.

Aufgrund der guten Löslichkeit von 1,2-Cyclohexandiaminplatin(II)bis-(4-methylbenzolsulfonat) und dessen Hydraten, insbesondere des Dihydrats in Wasser, kann die Referenzstandardlösung einfach hergestellt werden. Setzt man zur Bestimmung des Anteils der Verunreinigung B an Oxaliplatin die Mengen bzw. Konzentrationen an Wirkstoff und Referenzstandard, wie sie von der European Pharmacopeia EP 7.3 vorgegeben werden, ein so muss beim Ersatz des bisherigen Standards durch das Dihydrat von 1,2-Cyclohexandiaminplatin(II)bis-(4-methylbenzolsulfonat) beim Vergleich der Flächen aus den HPLC-Chromatogrammen ein Korrekturfaktor berücksichtigt werden. Dieser Korrekturfaktor ergibt sich aus dem Molmassenverhältnis des derzeitigen Standards für Verunreinigung B (1,2-Cyclohexandiamindinitatoplatin(II)) und des erfindungsgemäß verwendeten Referenzstandards (1,2-Cyclohexandiaminplatin(II)bis-(4-methylbenzolsulfonat) oder dessen Hydrate). Bei der Verwendung des Dihydrats von 1,2-Cyclohexandiaminplatin(II)bis-(4-methylbenzolsulfonat) als Referenzstandard ergibt sich ein Korrekturfaktor von (433,29 g/mol) / (687,69 g/mol) = 1,587. Mit diesem Wert muss das Flächenverhältnis (Fläche Chromatogramm Wirkstoff/Fläche Chromatogramm Referenzstandard) multipliziert werden.

Alternativ ist es auch möglich, die Menge des neuen Referenzstandards, also an einzusetzendem Dihydrat von 1,2-Cyclohexandiaminplatin(II)bis-(4-methylbenzolsulfonat) mittels des Korrekturfaktors anzupassen. Wird die Menge an eingesetztem Standard nach derzeitiger Vorgabe der European Pharmacopeia EP 7.3 mit dem Korrekturfaktor multipliziert, so kann ein direkter Vergleich der Fläche der Chromatogramm erfolgen, wenn die Einwaage an Oxaliplatin beibehalten wird.

Wird anstelle des Dihydrats von 1,2-Cyclohexandiaminplatin(II)bis-(4-methylbenzolsulfonat) das Monohydrat, ein sonstige Hydrat oder die nicht hydratisierte Verbindung von 1,2-Cyclohexandiaminplatin(II)bis-(4-methylbenzolsulfonat) verwendet, muss der Korrekturfaktor entsprechend berechnet werden.

Neben der Stabilität und einer einfachen Herstellbarkeit ist für Antitumorwirkstoffe die gezielte Anwendung entscheidend. Entsprechende Polymer modifizierte Platinkomplexe sind im Stand der Technik beschrieben. Als Ausgangsmaterial wird beispielsweise in US 2011/0286958 A1 Dinitrato(1,2-diaminocyclohexan)platin(II) verwendet.

Überraschenderweise hat sich nun gezeigt, dass das erfindungsgemäße 1,2-Cyclohexandiaminplatin(II)bis-(4-methylbenzolsulfonat) und dessen Hydrate zur Herstellung Polymer gebundener Cyclohexandiamin-platin(II)-Komplexe verwendet werden können. Die erfindungsgemäße Verwendung umfasst:
a. Bereitstellen von 1,2-Cyclohexandiaminplatin(II)bis-(4-methylbenzolsulfonat) oder eines Hydrats davon,
b. Bereitstellen eine Polymers, das wenigstens eine oder mehrere Gruppen aufweist, die in der Lage sind, eine Bindung mit Platin einzugehen,
c. Umsetzung von 1,2-Cyclohexandiaminplatin(II)bis-(4-methylbenzolsulfonat) oder eines Hydrats davon mit dem Polymer in einem Lösungsmittel.

Die Verwendung von 1,2-Cyclohexandiaminplatin(II)bis-(4-methylbenzolsulfonat) oder eines Hydrats davon ermöglicht eine flexible Umsetzung auf Grund der hohen Wasserlöslichkeit der Produkte. Insbesondere das Dihydrat weist eine gegenüber dem Stand der Technik bekannten Verbindungen eine hohe Wasserlöslichkeit von über 80 mg/ml auf. Daher wird in Schritt a. bevorzugt das Dihydrat von 1,2-Cyclohexandiaminplatin(II)bis-(4-methylbenzolsulfonat) verwendet. Weder das Dihydrat noch die anderen erfindungsgemäßen Hydrate von 1,2-Cyclohexandiaminplatin(II)bis-(4-methylbenzolsulfonat) oder die Verbindung an sich sind explosive Stoffe. Sich aus dem Stand der Technik ergebende Nachteile werden somit vermieden. Dabei ist es möglich, 1,2-Cyclohexandiaminplatin(II)bis-(4-methylbenzolsulfonat) oder eines der Hydrate davon mit bekannten Polymeren umzusetzen. Dabei fungieren die an das Platin gebundene Tosylat- oder Wassergruppen als Abgangsgruppen. Diese werden substituiert durch Gruppen innerhalb eines Polymers, das in der Lage ist, mit Platin eine Bindung, vorzugsweise eine koordinative Bindung, einzugehen.

Das Polymer, welches an den Cyclohexandiaminplatin(II)-Komplex gebunden wird, weist bevorzugt eine Gruppe auf, welche in der Lage ist, mit Platin einen 4- bis 7-gliedrigen Chelatring zu bilden. Entsprechende Chelatringe führen zu einem besonders stabilen Komplex mit Platin(II). Im Sinne der vorliegenden Erfindung umfassen 4 bis 7-gliedrige Chelatringe 4-gliedrige, 5-gliedrige, 6-gliedrige sowie 7-gliedrige Chelatringe.

Bevorzugt weist das Polymer Carboxylatgruppen, Amidgruppen oder Aminogruppen auf. Entsprechende polymere Verbindungen sind beispielsweise in US 2011/0286958 A1 beschrieben und beansprucht.

Die Umsetzung des Cyclohexandiaminplatin-Komplexes oder des Hydrats davon mit dem Polymer, findet in einem Lösungsmittel statt. Das Lösungsmittel umfasst vorzugsweise Wasser. Insbesondere handelt es sich bei dem Lösungsmittel um Wasser.

Bevorzugt handelt es sich bei dem Polymer um Poly(N-(2-hydroxypropyl)methacrylamido-gly-gly-gly-diethylaminomalonat (poly(HPMA)-GGG-Ame), wobei gly für Glycil steht.

In einer besonders bevorzugten Ausführungsform betrifft die vorliegende Erfindung daher die Verwendung des Dihydrats von 1,2-Cyclohexandiaminplatin(II)bis-(4-methylbenzolsulfonat) zur Herstellung Polymer gebundener Cyclohexandiamin-platin(II)-Komplexe umfassend:
a. Bereitstellen des Dihydrats von 1,2-Cyclohexandiaminplatin(II)bis-(4-methyl-benzolsulfonat),
b. Bereitstellen von poly(HPMA)-GGG-Ame,
c. Umsetzung des Dihydrats von 1,2-Cyclohexandiaminplatin(II)bis-(4-methyl-benzolsulfonat) mit poly(HPMA)-GGG-Ame in Wasser.

Die Glycil-Gruppen dienen dabei als Linker, um eine flexiblere Anbindung zu ermöglichen. Die eigentliche Anbindung des Polymers an das Platin (II) erfolgt über die Aminomalonat (Ame) Gruppe.

### Ausführungsbeispiele:

### 1. Chemische Synthese des Dihydrats von 1,2-Cyclohexandiaminplatin(II)bis-(4-methylbenzolsulfonat)

Zur chemischen Synthese des Dihydrats von 1,2-Cyclohexandiaminplatin(II)bis-(4-methylbenzolsulfonat) (Pt(DACH)bis-tosylat) wurde eine Suspension von Dichloro-R,R-(1,2-diaminocyclohexan)platin(II) in Wasser suspendiert und hierzu eine Lösung von 0,97 mol. Äquivalenten Silber(p-toluolsulfonat) in Wasser zugegeben. Das Gemisch wurde unter Lichtausschluss bei 55 °C für 48 Stunden gerührt. Anschließend wurde die Suspension auf 4°C abgekühlt und für weitere 4 Stunden nachgerührt. Das entstandene Silberchlorid wurde abfiltriert und anschließend das Filtrat mit Aktivkohle (5 Gew.% bez. auf Startmaterial) für weitere 20 Stunden bei Raumtemperatur gerührt und anschließend nochmals filtriert. Das erhaltene Filtrat wurde bei 50°C im Vakuum auf 30% des Anfangsvolumens eingeengt, anschließend erfolgte die Zugabe eines leichten Überschuss an 1-Butanol zur wässrigen Reaktionsmischung als Schleppmittel zum vollständigen Entfernen des Wassers. Dies wurde erreicht durch weiteres Einengen bei 50°C im Vakuum. Zu der nun wasserfreien Lösung in 1-Butanol wurden 15 eq. Wasser bezogen auf Platin zugegeben und die Lösung weitere 16 Stunden gerührt. Das Ausfällen der Zielverbindung wurde durch Zugabe des Antisolvens Ethylacetat zur 1-Butanol-Lösung durchgeführt. Der erhaltene Feststoff wurde abfiltriert und bei 40 °C im Vakuum getrocknet.

Die Analyse der Verbindung zeigte, dass es sich um das Dihydrat handelte (gefundener Wassergehalt 5,12%, theoretischer Wassergehalt 5,24 %).

Die Ausbeuten lagen zwischen 60 und 85 %.

### 2. Aufreinigung des Dihydrats von 1,2-Cyclohexandiaminplatin(II)bis-(4-methyl-benzolsulfonat)

Eine Aufreinigung des Dihydrats von 1,2-Cyclohexandiaminplatin(II)bis-(4-methyl-benzolsulfonat) durch eine anschließende Umkristallisation war reproduzierbar möglich.

Dazu wurde das Verfahren wie oben unter 1. beschrieben wiederholt: Lösen in wasserfreiem 1-Butanol, Zugabe definierter Wassermengen zur Bildung des Dihydrats, Ausfällen durch Zugabe von Ethylacetat zur 1-Butanol-Lösung.

Man erhielt Kristalle des Dihydrats von 1,2-Cyclohexandiaminplatin(II)bis-(4-methyl-benzolsulfonat).

### 3. Herstellung einer Diaquaspezies

Pt(II)DACH-bistosylat (4,28g; 6,568 mmol) wurde in 45 ml RW bei 50°C für 1 h gerührt. Die Lösung wurde über einen 0,2 µm RC-Filter (vliesverstärkt) von Sartorius filtriert und mit 40 ml RW gewaschen. Die Lösung wurde auf RT abkühlen lassen.

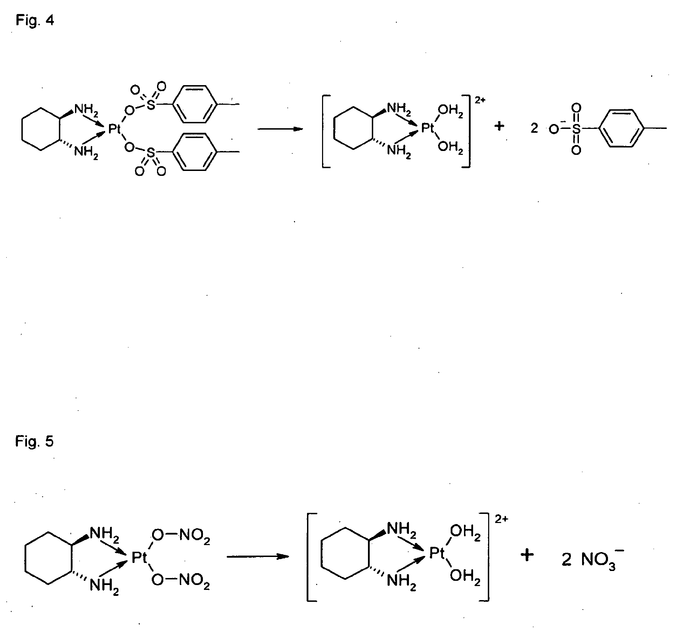

Fig. 4 zeigt die entsprechende Reaktion.

### 4. Herstellung eines Polymer-Konjugates mit Pt-DACH-Tosylat

11 g poly(HPMA)-GGG-Ame (entspricht 5,5 mmol Ame) wurden in 62 ml RW vorgelegt und bei RT für 30 min gerührt. Danach wurden 5 ml 2 N wässrige NaOH-Lösung zugegeben (pH=13) und weiter 30 min bei RT nachgerührt. Die Reaktionslösung wurde dann mit 5%iger wässriger HNO₃-Lösung auf pH 7,4 gestellt, über eine P5-Fritte und anschließend über Steritop (Merck; 0,1 µm Porengröße) filtriert, mit 10 ml RW nachgespült. Das Filtrat wurde in einen Kolben überführt und unter starkem Rühren mit der frisch hergestellten Pt-DACH-diaqua-Spezies - Lösung (aus Beispiel 3) versetzt, wobei der pH-Wert auf 5 fällt. Der pH-Wert der Lösung wurde dann mittels 2 N wässriger NaOH-Lösung auf 5,2 gestellt. Die Lösung wurde bei RT für 2 h bei konstantem pH-Wert gerührt (der pH-Wert wurde bei Bedarf mit NaOH-Lsg. nachjustiert). Anschließend wurde der pH-Wert der Reaktionslösung mit 2 N wässriger NaOH-Lsg. auf 7,4 eingestellt und auf 38°C erhitzt, dann 17 h bei 38°C mit konstantem pH-Wert von 7,4 gerührt (pH-Wert wurde mit einem Dosimat (716 DMS Titrino von Metrohm) konstant gehalten). Anschließend wurde die Lösung über Steritop (Merck; 0,1 µm) filtriert, mit 10 ml RW nachgespült. Die Lösung wurde mittels TFF auf ca. 60 ml aufkonzentriert und 5 x mit ca. 50 ml RW gereinigt. Das Retentat wurde in einen Doppelmantelkolben überführt, anschließend wurden 1,29 g NaCl, 243 mg NaH₂PO₄*H₂O und 1,89 g Na₂HPO₄*7H₂O zugegeben. Die Lösung wurde mit RW auf ein Gesamtvolumen von 150 ml aufgefüllt und nachdem die zugegebenen Salze komplett gelöst waren der pH-Wert mit 2 N wässriger NaOH-Lösung auf 7,4 gestellt. Der Ansatz wurde auf 38°C erhitzt und bei dieser Temperatur ohne Rühren für 4 h stehen gelassen. Anschließend wurde die Lösung über Steritop (Merck; 0,1 µm) filtriert und das Filtrat mittels TFF auf ca. 60 ml aufkonzentriert und RW gereinigt (7 Permeat-Lösungen wurden gesammelt). Das Retentat wurde anschließend lyophilisiert.

Die Ausbeute betrug 6,35 g (49,3%).
poly(HPMA)-GGG-Ame = poly(N-(2-hydroxypropyl)methacrylamido-gly-gly-gly-diethylaminomalonat
Poly(HPMA) = poly(N-(2-hydroxypropyl)methacrylamide
DACH = 1 R,2R-diaminocyclohexane
TFF = Tangential Flow Filtration
RW = Reinstwasser
RT = Raumtemperatur (20°C)

### 5. Vergleich mit dem Stand der Technik

### 5.a Herstellung einer Diaquaspezies ausgehend von Pt-DACH-Nitrat (Fig. 5)

PtDACH(NO₃)₂ (10 g; 23,079 mmol) wurde in 149 ml RW vorgelegt. Es wurde 657µl einer 5%igen HNO₃ zugegeben und anschließend 1 h bei 70°C gerührt. Die Lösung wurde über einen 0,2 µm RC-Filter (vliesverstärkt) von Sartorius filtriert und mit 40 ml RW gewaschen. Die Lösung wurde auf RT abkühlen lassen.

Fig. 5 zeigt die zugrunde liegende Reaktion.

### 5.b. Herstellung eines Polymer-Koniugates mit Pt-DACH-Nitrat

Die Herstellung erfolgte analog zu Beispiel 4, nur dass in Schritt B anstelle der Diaquaspezies aus Pt-DACH-Tosylat die Diaquaspezies aus Pt-pACH-Nitrat, wie in Beispiel 5.a hergestellt, eingesetzt wurde.

Die Ausbeute betrug 7,13 g (66,8 %).

## Patentansprüche

1. Dihydrat von 1,2-Cyclohexandiaminplatin(II)bis-(4-methylbenzolsulfonat).

2. Verfahren zur Herstellung von 1,2-Cyclohexandiaminplatin(II)bis-(4-methylbenzolsulfonat) und dessen Hydraten umfassend die folgenden Schritte:
a) Umsetzung von 1,2-Cyclohexandiamindihalogenplatin(II) mit Silber-4-methyl-benzolsulfonat in einem Wasser enthaltenden Lösungsmittel unter Bildung von 1,2-Cyclohexandiaminplatin(II)bis-(4-methylbenzolsulfonat) und Silberhalogenid,
b) Abtrennung des Silberhalogenids aus der Reaktionsmischung aus Schritt a),
c) Zugabe einer Verbindung, die mit Wasser ein azeotropes Gemisch bildet,
d) wenigstens teilweises Entfernen des Wassers aus dem azeotropen Gemisch,
e) Einstellung des Anteils an Wasser zur Ausbildung des gewünschten Hydrats von 1,2-Cyclohexandiaminplatin(II)bis-(4-methylbenzolsulfonat)
f) Isolation von 1,2-Cyclohexandiaminplatin(II)bis-(4-methylbenzolsulfonat) oder des Hydrats von 1,2-Cyclohexandiaminplatin(II)bis-(4-methylbenzolsulfonat).

3. Verfahren nach Anspruch 2, **dadurch gekennzeichnet, dass** man als Halogen in 1,2-Cyclohexandiamindihalogenplatin(II) Chlor, Brom und/oder lod einsetzt.

4. Verfahren nach Anspruch 2 oder Anspruch 3, **dadurch gekennzeichnet, dass** die Umsetzung unterstöchiometrisch in Bezug auf Silber-4-methylbenzolsulfonat erfolgt.

5. Verfahren nach einem oder mehreren der Ansprüche 2 bis 4, **dadurch gekennzeichnet, dass** man nach der Abtrennung des Silberhalogenids in Schritt b) und vor Zugabe der Verbindung, die mit Wasser ein azeotropes Gemisch bildet, in Schritt c) der Reaktionsmischung Aktivkohle zusetzt.

6. Verfahren nach einem oder mehreren der Ansprüche 2 bis 5, **dadurch gekennzeichnet, dass** das Wasser enthaltende Lösungsmittel in Schritt a) Wasser oder eine Mischung, welche Wasser und wenigstens eine weitere Verbindung, welche mit Waser ein azeotropes Gemisch bildet, enthält, ist.

7. Verfahren nach einem oder mehreren der Ansprüche 2 bis 6, **dadurch gekennzeichnet, dass** die Verbindung, die mit Wasser ein azeotropes Gemisch bildet, n-Butanol ist.

8. Verfahren nach einem oder mehreren der Ansprüche 2 bis 7, **dadurch gekennzeichnet, dass** das azeotrope Gemisch in Schritt d) vollständig entfernt wird unter Bildung einer Lösung von 1,2-Cyclohexandiaminplatin(II)bis-(4-methylbenzolsulfonat) in der Verbindung, die mit Wasser ein azeotropes Gemisch bildet.

9. Verfahren nach einem oder mehreren der Ansprüche 2 bis 8, **dadurch gekennzeichnet, dass** man in Schritt e) den Anteil an Wasser so einstellt, dass man das Dihydrat von 1,2-Cyclohexandiaminplatin(II)bis-(4-methylbenzolsulfonat) erhält und dieses dann in Schritt f) entfernt.

10. Verfahren nach einem oder mehreren der Ansprüche 2 bis 9, **dadurch gekennzeichnet, dass** man in Schritt f) zur Isolation von 1,2-Cyclohexandiaminplatin(II)bis-(4-methylbenzolsulfonat) oder des Hydrats von 1,2-Cyclohexandiaminplatin(II)bis-(4-methylbenzolsulfonat) ein Antisolvens, vorzugweise Ethylacetat, zur Mischung zugibt.

11. Verwendung von 1,2-Cyclohexandiaminplatin(II)bis-(4-methylbenzolsulfonat) und dessen Hydraten als Referenzstandard für (SP-4-2)-diaqua[(1R,2R)-cyclohexan-1,2-diamin-κN, κN']platin, umfassend
i. Bereitstellen einer Lösung von Oxaliplatin,
ii. Bereitstellen einer Lösung von 1,2-Cyclohexandiaminplatin(II)bis-(4-methylbenzolsulfonat) oder dessen Hydraten als Referenzstandard,
iii. Chromatographische Aufnahme der Oxaliplatin-Lösung aus Schritt i),
iv. Chromatographische Aufnahme der Referenzstandard-Lösung aus Schritt ii) und
v. Vergleich der chromatographischen Aufnahmen aus den Schritten iii) und iv) zur Bestimmung des Anteils an (*SP*-4-2)-diaqua[(1*R*,2*R*)-cyclohexan-1,2-diamin-κN, κN']platin.

12. Verwendung nach Anspruch 11, **dadurch gekennzeichnet, dass** man in Schritt i) und/oder Schritt ii) eine wässrige Lösung verwendet.

13. Verwendung nach Anspruch 11 oder Anspruch 12 **dadurch gekennzeichnet, dass** man das Dihydrat von 1,2-Cyclohexandiaminplatin(II)bis-(4-methylbenzolsulfonat) als Referenzstandard in Schritt ii) verwendet.

14. Verwendung nach einem oder mehreren der Ansprüche 11 bis 13, **dadurch gekennzeichnet, dass** es sich bei den chromatographischen Aufnahmen in den Schritten iii) und iv) um Hochdruckflüssigkeitschromatographische (HPLC) Aufnahmen handelt.

15. Verwendung des Dihydrats von 1,2-Cyclohexandiaminplatin(II)bis-(4-methylbenzolsulfonat) zur Herstellung polymergebundener Cyclohexandiamin-Platin(II)-Komplexe, umfassend:
a. Bereitstellen des Dihydrats von 1,2-Cyclohexandiaminplatin(II)bis-(4-methylbenzolsulfonat),
b. Bereitstellen eine Polymers, das wenigstens eine oder mehrere Gruppen aufweist, die in der Lage sind, eine Bindung mit Platin einzugehen,
c. Umsetzung des Dihydrats von 1,2-Cyclohexandiaminplatin(II)bis-(4-methylbenzolsulfonat) mit dem Polymer in einem Lösungsmittel.

16. Verwendung nach Anspruch 15, **dadurch gekennzeichnet, dass** das Polymer eine Gruppe aufweist, welche in der Lage ist, mit Platin einen 4 bis 7 gliedrigen Chelatring zu bilden.

17. Verwendung nach einem oder mehreren der Ansprüche 15 oder 16, **dadurch gekennzeichnet, dass** das Polymer Carboxylatgruppen, Amidgruppen oder Aminogruppen aufweist.

18. Verwendung nach einem oder mehreren der Ansprüche 15 oder 16, **dadurch gekennzeichnet, dass** das Lösungsmittel Wasser umfasst, insbesondere Wasser ist.

## Claims

1. Dihydrate of 1,2-cyclohexanediaminplatinum(II)-bis-(4-methylbenzenesulfonate).

2. Method for producing the dihydrate of 1,2-cyclohexanediaminplatinum(II)-bis-(4-methyl-benzenesulfonate) and hydrates thereof, comprising the following steps:
a) reacting 1,2-cyclohexanediamindihalogenplatinum(II) and silver 4-methylbenzenesulfonate in a water-containing solvent to form 1,2-cyclohexanediaminplatinum(II)-bis-(4-methylbenzenesulfonate) and silver halogenide;
b) separating the silver halogenide from the reaction mixture from step a);
c) adding a compound that forms an azeotropic mixture with water;
d) removing at least part of the water from the azeotropic mixture;
e) adjusting the water fraction to form the desired hydrate of 1,2-cyclohexanediaminplatinum(II)-bis-(4-methylbenzenesulfonate);
f) isolating 1,2-cyclohexanediaminplatinum(II)-bis-(4-methylbenzenesulfonate) or the hydrate of 1,2-cyclohexanediaminplatinum(II)-bis-(4-methylbenzenesulfonate).

3. Method according to claim 2, **characterised in that** chlorine, bromine and/or iodine is used as halogen in 1,2-cyclohexanediamindihalogenplatinum(II).

4. Method according to claim 2 or claim 3, **characterised in that** the reaction proceeds at sub-stoichiometric levels of silver 4-methylbenzenesulfonate.

5. Method according to one or more of the claims 2 to 4, **characterised in that** activated charcoal is added to the reaction mixture in step c) after separation of the silver halogenide in step b) and before the addition of the compound that forms an azeotropic mixture with water.

6. Method according to one or more of the claims 2 to 5, **characterised in that** the water-containing solvent in step a) is water or a mixture containing water and at least one further compound that forms an azeotropic mixture with water.

7. Method according to one or more of the claims 2 to 6, **characterised in that** the compound that forms an azeotropic mixture with water is n-butanol.

8. Method according to one or more of the claims 2 to 7, **characterised in that** the the azeotropic mixture is fully removed in step d) while forming a solution of 1,2-cyclohexanediaminplatinum(II)-bis-(4-methylbenzenesulfonate) in the compound that forms an azeotropic mixture with water.

9. Method according to one or more of the claims 2 to 8, **characterised in that** the water fraction is adjusted appropriately in step e) such that the dihydrate of 1,2-cyclohexanediaminplatinum(II)-bis-(4-methylbenzenesulfonate) is obtained and said substance is then removed in step f).

10. Method according to one or more of the claims 2 to 9, **characterised in that** an anti-solvent, preferably ethyl acetate, is added to the mixture in step f) in order to isolate 1,2-cyclohexanediaminplatinum(II)-bis-(4-methylbenzenesulfonate) or the hydrate of 1,2-cyclohexanediaminplatinum(II)-bis-(4-methylbenzenesulfonate).

11. Use of 1,2-cyclohexanediaminplatinum(II)-bis-(4-methylbenzenesulfonate) and hydrates thereof as reference standard for (SP-4-2)-diaqua[(1R,2R)-cyclohexane-1,2-diamin-κN, κN']platinum, comprising
i. providing an oxaliplatin solution;
ii. providing a solution of 1,2-cyclohexanediaminplatinum(II)-bis-(4-methylbenzenesulfonate) or hydrates thereof as reference standard;
iii. recording a chromatogram of the oxaliplatin solution from step i);
iv. recording a chromatogram of the reference standard solution from step ii); and
v. comparing the chromatograms from steps iii) and iv) in order to determine the fraction of (*SP*-4-2)-diaqua[(1*R*,2*R*)-cyclohexane-1,2-diamin-κN, κN']platinum.

12. Use according to claim 11, **characterised in that** an aqueous solution is used in step i) and/or step ii).

13. Use according to claim 11 or claim 12, **characterised in that** the dihydrate of 1,2-cyclohexanediaminplatinum(II)-bis-(4-methylbenzenesulfonate) is used as reference standard in step ii).

14. Use according to one or more of the claims 11 to 13, **characterised in that** the chromatograms in steps iii) and iv) are chromatograms from high-pressure liquid chromatography (HPLC).

15. Use of the dihydrate of 1,2-cyclohexanediaminplatinum(II)-bis-(4-methylbenzenesulfonate) for producing polymer-bound cyclohexanediaminplatinum(II) complexes, comprising:
a. providing of the dihydrate of 1,2-cyclohexanediaminplatinum(II)-bis-(4-methylbenzenesulfonate
b. providing a polymer that comprises at least one or more groups capable of forming a bond to platinum;
c. reacting of the dihydrate of 1,2-cyclohexanediaminplatinum(II)-bis-(4-methylbenzenesulfonate) with the polymer in a solvent.

16. Use according to claim 15, **characterised in that** the polymer comprises a group that is capable of forming a 4- to 7-membered chelate ring with platinum.

17. Use according to one or more of the claims 15 or 16, **characterised in that** the polymer comprises carboxylate groups, amide groups or amino groups.

18. Use according to one or more of the claims 15 or 16, **characterised in that** the solvent comprises water, specifically **in that** the solvent is water.

## Revendications

1. Dihydrate de 1,2-cyclohexanediamineplatine(II)bis-(4-méthylbenzènesulfonate).

2. Procédé de préparation de 1,2-cyclohexanediamineplatine(II)bis-(4-méthylbenzènesulfonate) et de ses hydrates comprenant les étapes suivantes :
a) conversion de 1,2-cyclohexanediaminedihalogèneplatine(II) avec du 4-méthyl-benzènesulfonate d'argent dans un solvant contenant de l'eau en formant du 1,2-cyclohexanediamineplatine(II)bis-(4-méthylbenzènesulfonate) et de l'halogénure d'argent,
b) séparation de l'halogénure d'argent du mélange réactionnel de l'étape a),
c) ajout d'un composé qui forme un mélange azéotrope avec de l'eau,
d) élimination au moins partielle de l'eau du mélange azéotrope,
e) réglage de la proportion d'eau pour la formation de l'hydrate souhaité de 1,2-cyclohexanediamineplatine(II)bis-(4-méthylbenzènesulfonate),
f) isolation de 1,2-cyclohexanediamineplatine(II)bis-(4-méthylbenzènesulfonate) ou de l'hydrate de 1,2-cyclohexanediamineplatine(II)bis-(4-méthylbenzènesulfonate).

3. Procédé selon la revendication 2, **caractérisé en ce que** l'on utilise comme halogène dans le 1,2-cyclohexanediaminedihalogèneplatine(II) du chlore, brome et/ou iode.

4. Procédé selon la revendication 2 ou la revendication 3, **caractérisé en ce que** la conversion s'effectue de manière sous-stoechiométrique par rapport au 4-méthylbenzènesulfonate d'argent.

5. Procédé selon une ou plusieurs des revendications 2 à 4, **caractérisé en ce que** l'on ajoute du charbon actif au mélange réactionnel à l'étape c) après la séparation de l'halogénure d'argent à l'étape b) et avant l'ajout du composé qui forme un mélange azéotrope avec de l'eau.

6. Procédé selon une ou plusieurs des revendications 2 à 5, **caractérisé en ce que** le solvant contenant de l'eau à l'étape a) est de l'eau ou un mélange qui contient de l'eau et au moins un autre composé qui forme un mélange azéotrope avec de l'eau.

7. Procédé selon une ou plusieurs des revendications 2 à 6, **caractérisé en ce que** le composé qui forme un mélange azéotrope avec de l'eau est le n-butanol.

8. Procédé selon une ou plusieurs des revendications 2 à 7, **caractérisé en ce que** le mélange azéotrope est entièrement éliminé à l'étape d) en formant une solution de 1,2-cyclohexanediamineplatine(II)bis-(4-méthylbenzènesulfonate) dans le composé qui forme un mélange azéotrope avec de l'eau.

9. Procédé selon une ou plusieurs des revendications 2 à 8, **caractérisé en ce que** l'on règle la proportion d'eau à l'étape e) de sorte que l'on obtient le dihydrate de 1,2-cyclohexanediamineplatine(II)bis-(4-méthylbenzènesulfonate) et élimine ensuite celui-ci à l'étape f).

10. Procédé selon une ou plusieurs des revendications 2 à 9, **caractérisé en ce que** l'on ajoute au mélange à l'étape f) un antisolvant, de préférence de l'acétate d'éthyle, pour l'isolation de 1,2-cyclohexanediamineplatine(II)bis-(4-méthylbenzènesulfonate) ou de l'hydrate de 1,2-cyclohexanediamineplatine(II)bis-(4-méthylbenzènesulfonate).

11. Utilisation de 1,2-cyclohexanediamineplatine(II)bis-(4-méthylbenzènesulfonate) et de ses hydrates comme norme de référence pour (SP-4-2)-diaqua[(1R,2R)-cyclohexane-1,2-diamine-κN, κN']platine, comprenant
i. préparation d'une solution d'oxaliplatine,
ii. préparation d'une solution de 1,2-cyclohexanediamineplatine(II)bis-(4-méthylbenzènesulfonate) ou de ses hydrates comme norme de référence,
iii. enregistrement chromatographique de la solution d'oxaliplatine de l'étape i),
iv. enregistrement chromatographique de la solution de norme de référence de l'étape ii) et
v. comparaison des enregistrements chromatographiques des étapes iii) et iv) pour la détermination de la proportion de (SP-4-2)-diaqua[(1R,2R)-cyclohexane-1,2-diamine-κN, κN']platine.

12. Utilisation selon la revendication 11, **caractérisée en ce que** l'on utilise une solution aqueuse à l'étape i) et/ou l'étape ii).

13. Utilisation selon la revendication 11 ou la revendication 12, **caractérisée en ce que** l'on utilise le dihydrate de 1,2-cyclohexanediamineplatine(II)bis-(4-méthylbenzènesulfonate) comme norme de référence à l'étape ii).

14. Utilisation selon une ou plusieurs des revendications 11 à 13, **caractérisée en ce qu'**il s'agit pour les enregistrements chromatographiques aux étapes iii) et iv) d'enregistrements de chromatographie liquide à haute performance (CLHP).

15. Utilisation du dihydrate de 1,2-cyclohexanediamineplatine(II)bis-(4-méthylbenzènesulfonate) pour la fabrication de complexes de cyclohexanediamine-platine(II) fixés à un polymère, comprenant :
a. préparation du dihydrate de 1,2-cyclohexanediamineplatine(II)bis-(4-méthylbenzènesulfonate),
b. préparation d'un polymère qui présente au moins un ou plusieurs groupes qui sont capables d'accepter une fixation avec du platine,
c. conversion du dihydrate de 1,2-cyclohexanediamineplatine(II)bis-(4-méthylbenzènesulfonate) avec le polymère dans un solvant.

16. Utilisation selon la revendication 15, **caractérisée en ce que** le polymère présente un groupe qui est capable de former un anneau chélaté à 4 à 7 membres avec du platine.

17. Utilisation selon une ou plusieurs des revendications 15 ou 16, **caractérisée en ce que** le polymère présente des groupes carboxylate, des groupes amide ou des groupes amino.

18. Utilisation selon une ou plusieurs des revendications 15 ou 16, **caractérisée en ce que** le solvant comprend de l'eau, notamment est de l'eau.
